# EUROPÄISCHE PATENTSCHRIFT

(11) **EP 2 935 081 B1**
(45) Veröffentlichungstag und Bekanntmachung des Hinweises auf die Patenterteilung: **28.06.2017**
(21) Anmeldenummer: 13819013.7
(22) Anmeldetag: 17.12.2013
(51) Int. Cl.: B66C 23/64, E02F 3/38, E04G 21/04

(54) **MASTARM FÜR EINEN BETONVERTEILERMAST UND VERFAHREN ZU DESSEN HERSTELLUNG**
MAST ARM FOR A CONCRETE DISTRIBUTOR MAST AND METHOD FOR THE PRODUCTION THEREOF
BRAS DE MÂT POUR UN MÂT DISTRIBUTEUR DE BÉTON ET PROCÉDÉ DE FABRICATION DE CE BRAS

(30) Priorität: 21.12.2012 DE 102012224340
(43) Veröffentlichungstag der Anmeldung: 28.10.2015
(73) Patentinhaber: Putzmeister Engineering GmbH, 72631 Aichtal (DE)
(72) Erfinder: FÜGEL, Dietmar, 72649 Wolfschlugen (DE); WESTERMANN, Karl, 72141 Walddorfhäslach (DE)
(74) Vertreter: Pfiz, Thomas
(86) Internationale Anmeldenummer: PCT/EP2013/076980
(87) Internationale Veröffentlichungsnummer: WO 2014/095926

(56) Entgegenhaltungen:
- EP-A1- 1 775 390
- CH-A- 556 208
- CN-A- 102 296 823
- DE-A1- 3 244 576
- FR-A1- 2 816 970
- JP-A- H03 180 628
- JP-A- H11 200 397

## Beschreibung

Die Erfindung betrifft einen Mastarm für einen Betonverteilermast mit einem zumindest abschnittsweise aus einem unteren Gurt, einem oberen Gurt und zwei die Gurte verbindenden Seitenwänden gebildeten, entlang einer Längsachse langgestreckten Kastenprofilträger und mindestens einem in einem Hohlquerschnitt des rechteckförmig-geschlossenen Kastenprofilträgers angeordneten Schottblechelement. Die Erfindung betrifft weiter ein Verfahren zur Herstellung eines solchen Mastarms.

Die DE 196 44 410 A1 offenbart einen Betonverteilermast als Träger für eine Betonförderleitung mit mehreren gelenkig verbundenen Mastarmen, die ein geschlossenes kastenförmiges Profil aufweisen. Dabei ist es vorgesehen, dass die Mastarme ein Kastenprofil aufweisen, und dass mindestens ein Mastarm eine den Innenraum quer durchsetzende aussteifende Schottwand enthält. Über die Fixierung oder Montage des Schottblechs geht aus dieser Druckschrift nichts weiter hervor. Das Dokument JP 411200397A offenbart alle technischen Merkmale des Oberbegriffs des Anspruchs 1. Ausgehend hiervon liegt der Erfindung die Aufgabe zugrunde, die im Stand der Technik bekannten Erzeugnisse und Verfahren weiter zu verbessern und eine einfach und präzise herstellbare, belastungsfeste Konstruktion eines Mastarms insbesondere für einen Betonverteilermast zu schaffen.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, Kerbwirkungen durch Querschweißnähte zu vermeiden. Dementsprechend wird erfindungsgemäß vorgeschlagen, dass das Schottblechelement über längs des Kastenprofilträgers in Richtung von dessen Längsachse verlaufende Längsschweißnähte mit dem Kastenprofilträger verschweißt ist. Dadurch kann eine günstige schweißtechnische Verarbeitung gewährleistet werden und die Aussteifungswirkung eines Schottblechs genutzt werden, ohne dass quer zur Belastungsrichtung des Arms verlaufende Schweißnähte auf den Arm wie Kerben wirken. Zugleich lässt sich damit auch mit reduzierten Blechstärken die Belastbarkeit bzw. Tragfähigkeit und Torsionssteifigkeit des Arms deutlich erhöhen.

Eine vorteilhafte Ausführung sieht vor, dass die Längsschweißnähte im Verbindungsbereich zwischen den Gurten und Seitenwänden in Richtung der Längsachse verlaufen, so dass auch das Zusammenfügen erleichtert wird.

Die längsgerichtete Schweißnahtanbindung lässt sich dadurch vereinfachen, dass das Schottblechelement aus einem ebenen Schottblech mit randseitig abstehenden Schweißlaschen gebildet ist, und dass die Längsschweißnähte an jeweils einer Schweißlasche angebracht sind.

Um eine feste Verbindung zu schaffen, ist es vorteilhaft, wenn die Schweißlaschen an jeweils einem Kantenabschnitt des Schottblechs vorzugsweise beidseitig angeschweißt sind.

Eine weitere Verbesserung lässt sich dadurch erreichen, dass das Schottblech vorzugsweise über Diagonalstreben in die Eckbereiche des Kastenprofilträgers eingreifende Eckpartien aufweist, und dass an jeder Eckpartie eine Schweißlasche angeordnet ist.

Auch in konstruktiver Hinsicht ist es von Vorteil, wenn die vorzugsweise T-förmig ausgebildeten Schweißlaschen einen beidseitig über das Schottblech überstehenden Verbindungssteg zum Verschweißen mit dem Kastenprofilträger aufweisen, und wenn die Schweißlaschen eine flächig gegen die Gurte oder die Seitenwände anliegende Grundfläche aufweisen. Gemäß die Erfindung, sind die Gurte oder die Seitenwände mit Ausschnitten zum Einbringen der Längsschweißnähte als Füllnaht versehen. Die Füllnaht füllt dabei den jeweiligen Ausschnitt zumindest bereichsweise aus.

Günstig ist es auch, wenn jeweils ein Gurt und eine Seitenwand in einem Verbindungsbereich durch eine die Längsschweißnaht überdeckende Decknaht miteinander verschweißt sind. Die Decknaht steht dabei in direktem bzw. stoffschlüssigem Kontakt mit der Längsschweißnaht. Dadurch können die Längsschweißnähte mit den üblicherweise ohnehin vorhandenen, die Gurte und die Seitenwände verbindenden Tägerschweißnähten zusammenfallen.

Besonders für eine platzsparende und zugleich hoch tragfähige Armkonstruktion ist es vorteilhaft, wenn der Kastenprofilträger in mindestens einem Kröpfungsabschnitt abgekröpft ist, und wenn der Kröpfungsabschnitt durch ein Schottblechelement ausgesteift ist.

Gegenstand der Erfindung ist auch ein Verteilermast mit mehreren gelenkig miteinander verbundenen Mastarmen zur Halterung einer Betonförderleitung, wobei mindestens ein Mastarm mit einem Schottblechelement erfindungsgemäß ausgesteift ist.

In verfahrensmäßiger Hinsicht wird die eingangs genannte Aufgabe dadurch gelöst, dass das Schottblechelement über längs des Kastenprofilträgers verlaufende Längsschweißnähte mit dem Kastenprofilträger verschweißt wird und dadurch, dass die Gurte oder die Seitenwände mit Ausschnitten versehen werden, wobei in die Ausschnitte jeweils eine Längsschweißnaht als Füllnaht eingebracht wird. Eine weitere vorteilhafte Maßnahme besteht darin, dass das Schottblechelement aus einem ebenen Schottblech und randseitig daran angebrachten Schweißlaschen vorgefertigt wird und über jeweils eine Längsschweißnaht an den Schweißlaschen im Verbindungsbereich zwischen den Gurten und Seitenwänden in dem Kastenprofilträger fixiert wird.

Dabei können die Längsschweißnähte durch eine Decknaht zur Verbindung einer Seitenwand mit einem Gurt überdeckt werden.

Im Folgenden wird die Erfindung anhand des in der Zeichnung schematisch dargestellten Ausführungsbeispiels näher erläutert. Es zeigen:
- Fig. 1: einen Mastarm für einen Betonverteilermast mit eingebauten Schottblechen in transparenter perspektivischer Darstellung;
- Fig. 2: eine ausschnittsweise vergrößerte Darstellung eines Schottblech-Abschnitts des Mastarms nach Fig. 1;
- Fig. 3: eine perspektivisch-abgebrochene Darstellung des Schottblech-Abschnitts beim Anfügen des Obergurts;
- Fig. 4: einen ausschnittsweisen Querschnitt des Mastarms im Bereich eines eingebauten Schottblechs.

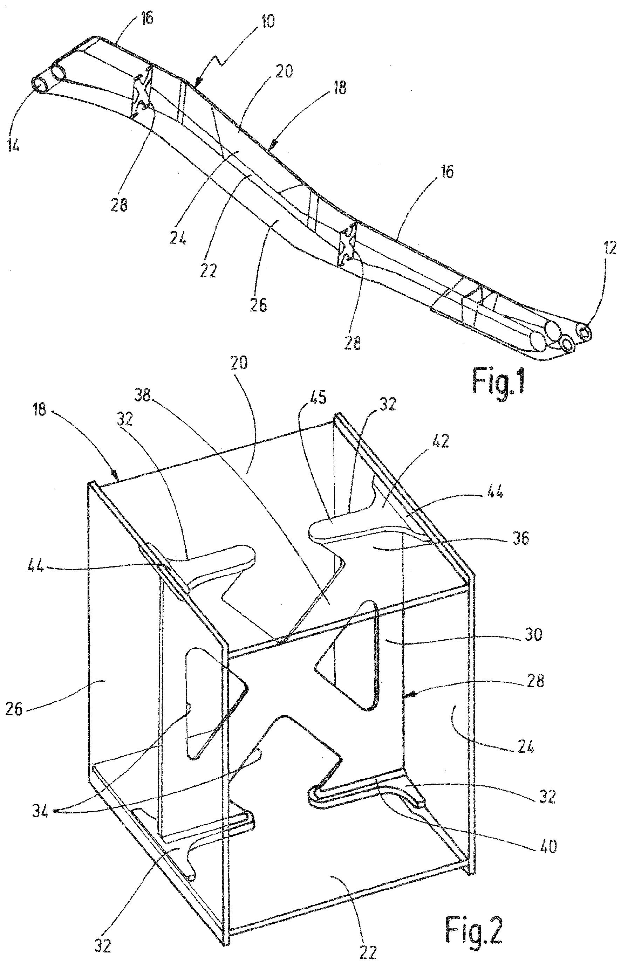

Die in Fig. 1 gezeigte Mastarm 10 lässt sich über Gelenkenden 12, 14 mit weiteren Mastarmen als Knickmast zur Führung einer Betonförderleitung gelenkig verbinden, wobei seitlich abgekröpfte Armbereiche 16 ein platzsparendes Einfalten des Armpakets ermöglichen. Der Mastarm 10 weist einen entlang einer Längsachse langgestreckten Kastenprofilträger 18 auf, der aus einem Obergurt 20, einem Untergurt 22 und zwei Seitenwänden 24, 26 im Querschnitt rechteckförmig zusammengesetzt ist. In den Kröpfungsbereichen 16 sind Schottblechelemente 28 zur Aussteifung im Hohlquerschnitt des transparent dargestellten Kastenprofilträgers 18 angeordnet.

Wie am besten aus Fig. 2 ersichtlich, besteht jedes Schottblechelement 28 aus einem der Grundform nach rechteckförmigen, ebenen Schottblech 30 und vier in den Eckbereichen randseitig abstehenden Schweißlaschen 32.

Das Schottblech 30 ist zur Gewichtseinsparung mit Aussparungen 34 versehen, wobei die mit den Schweißlaschen 32 versehenen Eckpartien 36 über Diagonalstreben 38 verbunden bleiben, so dass Parallelogrammverschiebungen des Kastenprofilträgers 18 verhindert werden.

Die T-förmig ausgebildeten Schweißlaschen 32 sind an ihrem Basisschenkel mit einem Kantenabschnitt des Schottblechs 30 über eine umlaufende Schweißnaht 40 fest verbunden. Der beidseitig an dem Schottblech 30 quer abstehende Verbindungssteg 42 der Schweißlaschen 32 ermöglicht ein Verschweißen mit dem Kastenprofilträger 18 über eine in Richtung der Trägerlängsachse verlaufende Längsschweißnaht 44, wie es nachstehend näher erläutert wird. Die Längsschweißnähte 44 befinden sich dabei jeweils im Verbindungsbereich zwischen einem Gurt 20, 22 und einer Seitenwand 24, 26. Im eingebauten Zustand liegen die Schweißlaschen 32 mit ihrer freien Grundfläche 45 flächig gegen die Gurte 20, 22 an.

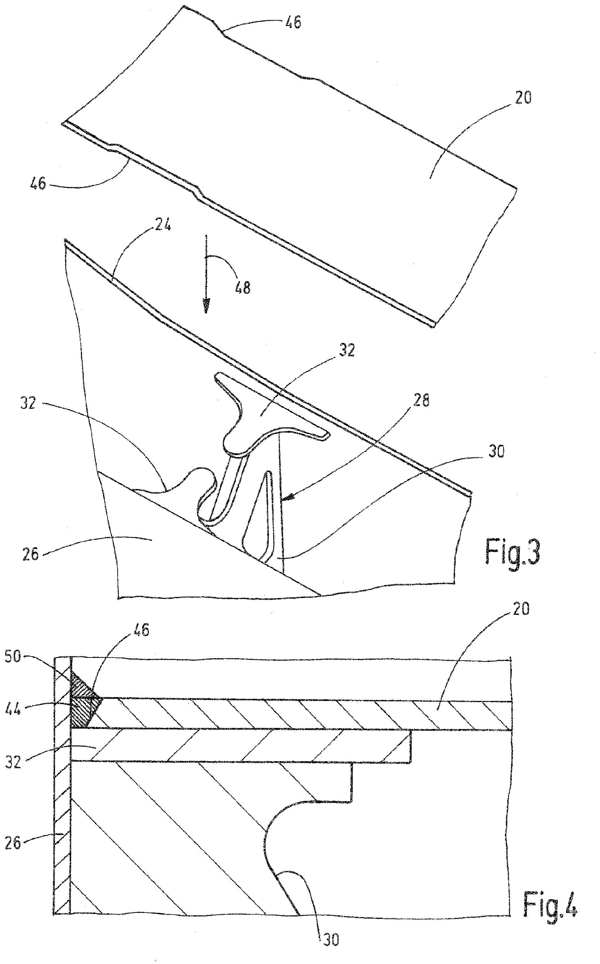

Die Herstellung bzw. der Zusammenbau des Kastenprofilträgers 18 wird im Folgenden anhand Fig. 3 und 4 erläutert. Die Schottblechelemente 28 werden gesondert vorgefertigt, indem das Schottblech 30 aus einem Flacheisenmaterial zugeschnitten und daran die Schweißlaschen 32 angeschweißt werden. Die Gurte 20, 22 werden kantenseitig mit Ausschnitten 46 zum Einbringen der Längsschweißnähte 44 versehen. Bei der Endfertigung des Kastenprofilträgers 18 werden zunächst der Untergurt 26 und die beiden Seitenwände 24, 26 miteinander und mit den eingestellten Schottblechelementen 28 verschweißt, wobei die Schottblechelemente 28 auch für eine verbesserte Maßhaltigkeit beim Zusammenfügen sorgen können. Sodann wird der Obergurt 20 in Richtung des Pfeils 48 aufgesetzt und fixiert.

Im Bereich der Schweißlaschen 32 wird die jeweilige Längsschweißnaht 44 als Füllnaht in den Gurtausschnitt 46 von außen eingebracht (Fig. 4). Anschließend erfolgt die Schweißverbindung der Seitenwände 24, 26 mit dem Obergurt 20 über Verbindungsnähte 50, die im Kantenbereich entlang eines randseitigen Überstands der Seitenwände 24, 26 über dem Obergurt 20 verlaufen und die Längsschweißnähte 46 im Bereich der Ausschnitte 46 überdecken. Es versteht sich, dass die Schweißnähte 44, 50 auch am Untergurt 22 entsprechend angebracht werden. Somit sind für das Zusammenfügen keine Schweißarbeiten im Inneren des Kastenprofilträgers 18 erforderlich. Zudem werden Kerbwirkungen als Folge von Querschweißnähten vermieden.

## Patentansprüche

1. Mastarm für einen Betonverteilermast mit einem zumindest abschnittsweise aus einem unteren Gurt (22), einem oberen Gurt (20) und zwei die Gurte (20,22) verbindenden Seitenwänden (24,26) gebildeten, entlang einer Längsachse langgestreckten Kastenprofilträger (18) und mindestens einem in einem Hohlquerschnitt des rechteckförmig-geschlossenen Kastenprofilträgers (18) angeordneten Schottblechelement (28), **dadurch gekennzeichnet, dass** das Schottblechelement (28) über längs des Kastenprofilträgers (18) verlaufende Längsschweißnähte (44) mit dem Kastenprofilträger (18) verschweißt ist, und dass die Gurte (20,22) oder die Seitenwände (24,26) mit Ausschnitten (46) zum Einbringen der Längsschweißnähte (44) als Füllnaht versehen sind.

2. Mastarm nach Anspruch 1, **dadurch gekennzeichnet, dass** die Längsschweißnähte (44) im Verbindungsbereich zwischen den Gurten (20,22) und Seitenwänden (24,26) in Richtung der Längsachse verlaufen.

3. Mastarm nach Anspruch 1 oder 2, **dadurch gekennzeichnet, dass** das Schottblechelement (28) aus einem ebenen Schottblech (30) mit randseitig abstehenden Schweißlaschen (32) gebildet ist, und dass die Längsschweißnähte (44) an jeweils einer Schweißlasche (32) angebracht sind.

4. Mastarm nach Anspruch 3, **dadurch gekennzeichnet, dass** die Schweißlaschen (32) an jeweils einem Kantenabschnitt des Schottblechs (30) vorzugsweise beidseitig angeschweißt sind.

5. Mastarm nach Anspruch 3 oder 4, **dadurch gekennzeichnet, dass** das Schottblech (30) vorzugsweise über Diagonalstreben (38) in die Eckbereiche des Kastenprofilträgers (18) eingreifende Eckpartien (36) aufweist, und dass an jeder Eckpartie (36) eine Schweißlasche (32) angeordnet ist.

6. Mastarm nach einem der Ansprüche 3 bis 5, **dadurch gekennzeichnet, dass** die vorzugsweise T-förmig ausgebildeten Schweißlaschen (32) einen beidseitig über das Schottblech (30) überstehenden Verbindungssteg (42) zum Verschweißen mit dem Kastenprofilträger (18) aufweisen.

7. Mastarm nach einem der Ansprüche 3 bis 6, **dadurch gekennzeichnet, dass** die Schweißlaschen (32) eine flächig gegen die Gurte (20,22) oder die Seitenwände (24,26) anliegende Grundfläche (45) aufweisen.

8. Mastarm nach einem der Ansprüche 1 bis 7, **dadurch gekennzeichnet, dass** jeweils ein Gurt (20,22) und eine Seitenwand (24,26) in einem Verbindungsbereich durch eine die Längsschweißnaht (44) überdeckende Decknaht (50) miteinander verschweißt sind.

9. Mastarm nach einem der Ansprüche 1 bis 8, **dadurch gekennzeichnet, dass** der Kastenprofilträger (18) in mindestens einem Kröpfungsabschnitt (16) abgekröpft ist, und dass der Kröpfungsabschnitt (16) durch ein Schottblechelement (28) ausgesteift ist.

10. Verteilermast mit mehreren gelenkig miteinander verbundenen Mastarmen zur Halterung einer Betonförderleitung, wobei mindestens ein Mastarm (10) nach einem der vorhergehenden Ansprüche ausgebildet ist.

11. Verfahren zur Herstellung eines Mastarms (10) für einen Betonverteilermast, bei dem ein unterer Gurt (22), ein oberer Gurt (20) und zwei Seitenwänden (24,26) als rechteckförmig-geschlossener, langgestreckter Kastenprofilträger (18) miteinander verbunden werden, wobei mindestens ein Schottblechelement (28) in einen Hohlquerschnitt des Kastenprofilträgers (18) eingestellt wird, **dadurch gekennzeichnet, dass** das Schottblechelement (28) über längs des Kastenprofilträgers (18) verlaufende Längsschweißnähte (44) mit dem Kastenprofilträger (18) verschweißt wird, und dass die Gurte (20,22) oder die Seitenwände (24,26) mit Ausschnitten (46) versehen werden, und dass in die Ausschnitte (46) jeweils eine Längsschweißnaht (44) als Füllnaht eingebracht wird.

12. Verfahren nach Anspruch 11, **dadurch gekennzeichnet, dass** das Schottblechelement (28) aus einem ebenen Schottblech (30) und randseitig daran angebrachten Schweißlaschen (32) vorgefertigt wird und über jeweils eine Längsschweißnaht (44) an den Schweißlaschen (32) im Verbindungsbereich zwischen den Gurten (20,22) und Seitenwänden (24,26) in dem Kastenprofilträger (18) fixiert wird.

13. Verfahren nach Anspruch 11 oder 12, **dadurch gekennzeichnet, dass** die Längsschweißnähte (44) durch eine Decknaht (50) zur Verbindung einer Seitenwand (24,26) mit einem Gurt (20,22) überdeckt werden.

## Claims

1. Mast arm for a concrete distributor mast with an box profile support (18) elongated along a longitudinal axis and composed, at least in sections, of a lower flange (22), an upper flange (20) and two lateral walls (24, 26) which connect the flanges (20, 22), and comprising at least one partition plate element (28) arranged in a hollow cross section of the rectangular-shaped closed box profile support (18), **characterized in that** the partition plate element (28) is welded to the box profile support (18) by way of longitudinal welding joints (44) running along the box profile support (18), and that the flanges (20 22) or the lateral walls (24, 26) are provided with cutouts (46) for introducing the longitudinal welding joints (44) as fill joint.

2. The mast arm as claimed in claim 1, **characterized in that** the longitudinal welding joints (44) run in the connection region between the flanges (20, 22) and lateral walls (24, 26) in the direction of the longitudinal axis.

3. The mast arm as claimed in claim 1 or 2, **characterized in that** the partition plate element (28) is formed from a flat partition plate (30) with welding lugs (32) protruding up along the edges, and that the longitudinal welding joints (44) are each fitted to a welding lug (32).

4. The mast arm as claimed in claim 3, **characterized in that** the welding lugs (32) are each welded on an edge portion of the partition plate (30), preferably on both sides.

5. The mast arm as claimed in claim 3 or 4, **characterized in that** the partition plate (30) has corner parts (36) preferably engaging by way of diagonal stays (38) into the corner regions of the box profile support (18), and that a welding lug (32) is arranged on each corner part (36).

6. The mast arm as claimed in one of claims 3 to 5, **characterized in that** the preferably T-shaped welding lugs (32) have a connecting web (42) protruding either side over the partition plate (30) for welding to the box profile support (18).

7. The mast arm as claimed in one of claims 3 to 6, **characterized in that** the welding lugs (32) have a base surface (45) which bears flat against the flanges (20, 22) or the lateral walls (24, 26).

8. The mast arm as claimed in one of claims 1 to 7, **characterized in that** each one flange (20, 22) and one lateral wall (24, 26) in a connection region are welded to one another by a cap joint (50) which covers the longitudinal welding joint (44).

9. The mast arm as claimed in one of claims 1 to 8, **characterized in that** the box profile support (18) is bent in at least one crank portion (16), and that the crank portion (16) is reinforced by a partition plate element (28).

10. A distributor mast with several mast arms connected to one another for articulation for holding a concrete delivery pipe, wherein at least one mast arm (10) is formed according to one of the preceding claims.

11. A method for producing a mast arm (10) for a concrete distributor mast, wherein a lower flange (22), an upper flange (20) and two lateral walls (24, 26) are connected to one another as a rectangular closed elongated box profile support (18), wherein at least one partition plate element (28) is set in a hollow cross section of the box profile support (18), **characterized in that** the partition plate element (28) is welded to the box profile support (18) via longitudinal welding joints (44) which run along the box profile support (18), and that the flanges (20 22) or the lateral walls (24, 26) are provided with cutouts (46), and that in each of the cutouts (46) a longitudinal welding joint (44) is introduced as fill joint.

12. The method as claimed in claim 11, **characterized in that** the partition plate element (28) is prefabricated from a flat partition plate (30) and welding lugs (32) attached to the edges thereof, and is fixed in the box profile support (18) by longitudinal welding joints (44) at the welding lugs (32) in the connecting region between the flanges (20, 22) and lateral walls (24, 26).

13. The method as claimed in claims 11 or 12, **characterized in that** the longitudinal welding joints (44) are covered by a cap joint (50) to connect a lateral wall (24, 26) to a flange (20, 22).

## Revendications

1. Bras de mât pour mât distributeur de béton comprenant une poutre profilée en caisson (18), de grande longueur, formée au moins dans certaines zones d'une semelle inférieure (22), d'une semelle supérieure (20) et de deux parois latérales (24, 26) reliant les semelles (20, 22), et au moins un élément en tôle formant cloison (28) disposé dans une section transversale creuse de la poutre profilée en caisson (18) fermée et formant un rectangle, **caractérisé en ce que** l'élément en tôle formant cloison (28) est soudé à la poutre profilée en caisson (18) par des cordons de soudure longitudinaux (44) s'étendant le long de la poutre profilée en caisson (18) et **en ce que** les semelles (20, 22) ou les parois latérales (24, 26) sont pourvues de découpes (46) permettant d'insérer les cordons de soudure longitudinaux (44) en tant que soudure de remplissage.

2. Bras de mât selon la revendication 1, **caractérisé en ce que** les cordons de soudure longitudinaux (44) s'étendent dans la direction de l'axe longitudinal dans la zone de liaison entre les semelles (20, 22) et les parois latérales (24, 26).

3. Bras de mât selon la revendication 1 ou 2, **caractérisé en ce que** l'élément en tôle formant cloison (28) est formé d'une tôle formant cloison plane (30) avec des pattes de soudure (32) s'écartant des côtés des bords, et **en ce que** les cordons de soudure longitudinaux (44) sont appliqués sur une patte de soudure (32) respective.

4. Bras de mât selon la revendication 3, **caractérisé en ce que** les pattes de soudure (32) sont soudées à chaque fois à une partie d'arête de la tôle formant cloison (30), de préférence sur les deux côtés.

5. Bras de mât selon la revendication 3 ou 4, **caractérisé en ce que** la tôle formant cloison (30) comporte des parties d'angle (36) se mettant en prise dans les zones d'angle de la poutre profilée en caisson (18), de préférence par le biais de croisillons diagonaux (38), et **en ce qu'**une patte de soudure (32) est disposée au niveau de chaque partie d'angle (36).

6. Bras de mât selon l'une des revendications 3 à 5, **caractérisé en ce que** les pattes de soudure (32), exécutées de préférence en forme de T, comportent une bride de liaison (42) saillante dépassant des deux côtés de la tôle formant cloison (30), destinée au soudage avec la poutre profilée en caisson (18).

7. Bras de mât selon l'une des revendications 3 à 6, **caractérisé en ce que** les pattes de soudure (32) présentent une surface de base (45) en appui plan contre les semelles (20, 22) ou les parois latérales (24, 26).

8. Bras de mât selon l'une des revendications 1 à 7, **caractérisé en ce que**, à chaque fois, une semelle (20, 22) et une paroi latérale (24, 26) sont soudées l'une à l'autre dans une zone de liaison par une soudure de recouvrement (50) recouvrant le cordon de soudure longitudinal (44).

9. Bras de mât selon l'une des revendications 1 à 8, **caractérisé en ce que** la poutre profilée en caisson (18) est coudée dans au moins une partie formant coude (16) et **en ce que** la partie formant coude (16) est renforcée par un élément en tôle formant cloison (28).

10. Mât distributeur comprenant plusieurs bras de mât relié les uns aux autres de manière articulée pour supporter une conduite d'alimentation en béton, au moins un bras de mât (10) étant exécuté selon l'une des revendications précédentes.

11. Procédé de construction d'un bras de mât (10) pour un mât distributeur de béton, dans lequel une semelle inférieure (22), une semelle supérieure (20) et deux parois latérales (24, 26) sont reliées les unes aux autres en tant que poutre profilée en caisson (18), de grande longueur, fermée et formant un rectangle, au moins un élément en tôle formant cloison (28) étant installé dans une section transversale creuse de la poutre profilée en caisson (18), **caractérisé en ce que** l'élément en tôle formant cloison (28) est soudé à la poutre profilée en caisson (18) par des cordons de soudure longitudinaux (44) s'étendant le long de la poutre profilée en caisson (18), et **en ce que** les semelles (20, 22) ou les parois latérales (24, 26) sont pourvues de découpes (46) et **en ce qu'**un cordon de soudure longitudinal (4) respectif est inséré dans les découpes (46) en tant que soudure de remplissage.

12. Procédé selon la revendication 11, **caractérisé en ce que** l'élément en tôle formant cloison (28) est préfabriqué à partir d'une tôle formant cloison plane (30) et de pattes de soudure (32) appliquées sur celui-ci du côté des bords, et est fixé dans la poutre profilée en caisson (18), dans la zone de liaison entre les semelles (20, 22) et les parois latérales (24, 26), par le biais d'un cordon de soudure longitudinal (44) respectif au niveau des pattes de soudure (32).

13. Procédé selon la revendication 11 ou 12, **caractérisé en ce que** les cordons de soudure longitudinaux (44) sont recouverts par une soudure de recouvrement (50) destinée à la liaison d'une paroi latérale (24, 26) avec une semelle (20, 22).
